# EUROPEAN PATENT SPECIFICATION

(11) **EP 0 970 262 B1**
(45) Date of publication and mention of the grant of the patent: **01.03.2006**
(21) Application number: 98913081.0
(22) Date of filing: 23.03.1998
(51) Int. Cl.: C25B 1/00

(54) **AN INTEGRATED OZONE GENERATOR SYSTEM**
INTEGRIERTES OZONERZEUGUNGSSYTEM
SYSTEME A GENERATEUR D'OZONE INTEGRE

(30) Priority: 21.03.1997 US 821419; 31.03.1997 US 829604; 05.01.1998 US 2754
(43) Date of publication of application: 12.01.2000
(60) Divisional application: 05021665.4
(73) Proprietor: Lynntech, Inc., College Station, TX 77840 (US)
(72) Inventor: ANDREWS, Craig, C., College Station, TX 77840 (US); MURPHY, Oliver, J., Bryan, TX 77802 (US); ROGERS, Thomas, D., Wheelock, TX 77882 (US)
(74) Representative: Frankland, Nigel Howard
(86) International application number: PCT/US1998/005777
(87) International publication number: WO 1998/042617

(56) References cited:
- EP-A- 0 342 169
- JP-A- 7 047 377
- US-A- 5 460 705
- US-A- 5 529 683

## Description

This invention relates to the production of ozone for use in a variety of processes such as decontamination of water. More specifically, the invention relates to an electrochemical cell and a process for generating ozone in the electrochemical cell.

Ozone has long been recognised as a useful chemical commodity valued particularly for its outstanding oxidative activity. Because of this activity, it finds wide application in disinfection processes and the removal of cyanides, phenols, iron, manganese, and detergents. Thus, ozone has widespread application in many diverse activities, and its use would undoubtedly expand if its cost of production could be reduced. In addition, since ozone is explosive when concentrated as either a gas or liquid, or when dissolved into solvents or absorbed into cells, its transportation is potentially hazardous. Therefore, its is generally manufactured on the site where it is used. However, the cost of generating equipment, and poor energy efficiency of production has deterred its use in many applications and in many locations.

Ozone may be produced by an electrolytic process, wherein an electric current (normally D.C.) is impressed across electrodes immersed in an electrolyte, i.e., an electrically conducting fluid. The electrolyte includes water, which, in the process dissociates into its respective elemental species, O₂ and H₂. Under the proper conditions, the oxygen is also evolved as the O₃ species. The evolution of O₃ may be represented as:

3H₂O=O₃ + 3H₂;ΔH° ₂₉₈ =207.5 kcal

However, to date, the necessary high yields have not been realised in any foreseeably practical electrolytic system.

Furthermore, because ozone gas has a very short life, it is preferably generated in close proximity to where the ozone will be consumed and at a rate substantially equal to the rate of consumption. Because so many of the present applications for ozone deal with the oxidation of contaminants in water streams, air streams and soil, it is typically impractical to bring the contaminant to a centralised ozone processing plant. Rather, it is imperative that the ozone be generated at the site of the contamination. This may be an active or abandoned industrial site or a remote location where little or no utilities are available. Furthermore, the rate of ozone consumption will vary according to the type of decontamination process and the nature of the site itself.

Unfortunately, there has been very little attention given to the development of self-contained and self-controlled support systems and utilities for ozone producing electrochemical cells. In order for these systems to be commercially successful, the systems must be reliable, require low maintenance, operate efficiently and be able to operate on standard mains electricity. Furthermore, these objectives must be met while providing a simple system that can be used to decontaminate a site in a cost-effective manner.

Therefore, there is a need for an ozone generator system that operates efficiently on standard AC electricity and water to deliver a steady and reliable stream of ozone gas. It would be desirable if the system was self-contained, self-controlled and required very little maintenance. It would be further desirable if the system could provide a continuous supply of ozone at a rate dependent upon demand.

There is also a need for an ozone generator system that operates efficiently on standard AC or DC electricity and water to deliver a reliable stream of ozone gas that is generated under pressure for direct use in a given application. Still other applications would benefit from a stream of highly concentrated ozone that is already dissolved in water where it may be used directly or diluted into a process stream so that a target ozone concentration may be achieved. It would be desirable if the ozone generator system was self-contained, self- controlled and required very little maintenance. It would be further desirable if the system had a minimum number of moving or wearing components, a minimal control system, and was compatible with low voltage power sources such as solar cell arrays, vehicle electrical systems, or battery power.

According to this invention there is provided an ozone generating system, comprising: one or more electrolytic cells comprising an anode chamber and a cathode chamber; an anode reservoir in fluid communication with the anode chamber; a cathode reservoir in fluid communication with the cathode chamber, wherein an ion exchange membrane is disposed between the anode and the cathode characterised in that the anode and cathode reservoirs each comprise a water inlet with a water source in fluid communication with the water inlet port of the anode reservoir, and a water source in fluid communication with the water inlet port of the cathode reservoir; the anode reservoir comprising a first gas releasing member, and the cathode reservoir comprising a second gas releasing member, one or more of the gas releasing members comprising a hydrophobic gas permeable member.

Preferably a single water source is in communication with the water inlet ports, the system further comprising a water pressure boosting pump in communication with the water source.

Conveniently there is no obstruction to flow from the water source to the cathode reservoir.

Advantageously water re-circulating means are provided for re-circulating water between the anode reservoir and the anode chamber.

Preferably the anode reservoir has a stand pipe for returning water from the anode chamber.

Advantageously the stand pipe has a small hole for equalising water levels in the stand pipe and the anode reservoir at low re-circulation rates.

Preferably the restricted fluid communication is provided by a flow line communicating the anode reservoir and the cathode reservoir, the flow line having a sufficiently small diameter to substantially eliminate diffusion of dissolved ozone and oxygen in the anode water into the cathode.

Advantageously the flow line has a back flow prevention device to prevent communication of water or gas from the anode reservoir to the cathode reservoir.

Advantageously the system further comprises a flow line between the anode reservoir and the anode chamber, and a pump disposed in the flow line.

Conveniently the anode reservoir is elevated above the anode chamber and the anode reservoir inlet communicates with the top of the anode chamber.

Preferably gases generated at the anode rise into the anode reservoir.

Advantageously at least one gas releasing member is a valve.

Preferably the system further comprises a system controller programmed to operate the or each valve based on the water level in the respective reservoir.

Advantageously one or more of the hydrophobic, gas permeable members comprises porous polytetrafluoroethylene.

Conveniently the system further comprises a pressure regulator disposed in fluid communication with one or more of the gas releasing members.

Advantageously the system further comprises a dip tube having a first end disposed in the cathode reservoir, a second end at nearly ambient pressure, and a hydrophobic, gas permeable membrane disposed between the first and second ends.

Preferably the system further comprises a dip tube having a first end disposed in the anode reservoir, a second end at nearly ambient pressure, and a hydrophobic, gas permeable membrane disposed between the first and second ends.

Preferably the system further comprises a battery backup in electronic communication with the electrolytic cells.

Advantageously the battery backup is electronically connected in a parallel circuit with a power supply.

Preferably the re-circulating means comprises a pump adapted to extract water from the anode reservoir and to pump water past the anode, water from the anode being re-introduced to the anode reservoir.

Advantageously at least one reservoir is provided with a water cooling member in thermal communication with the reservoir.

Conveniently the water cooling member comprises a cooling coil that circulates a cooling fluid through a cooling cycle that includes a condenser and a compressor.

Advantageously the system is provided with a system controller adapted to receive signals from sensors adapted to sense the levels of liquid in the reservoirs and to send control signals to active components of the system.

In order that the invention may be more readily understood the invention will now be described, by way of example, with reference to the accompanying drawings in which:
FIGURE 1 is a schematic diagram of a self-controlled ozone generator which operates solely on electricity and distilled water,
FIGURE 2 is a schematic diagram of an entirely passive ozone generation and delivery system which operates solely on water and a source of electrical power,
FIGURE 3 is a schematic diagram of an entirely passive ozone generation system with an alternative electrochemical cell configured in a filter press type arrangement,
FIGURE 4 is a schematic diagram of a self-pressurising ozone generation and delivery system, and
FIGURE 5 is a schematic diagram of an alternate ozone generator.

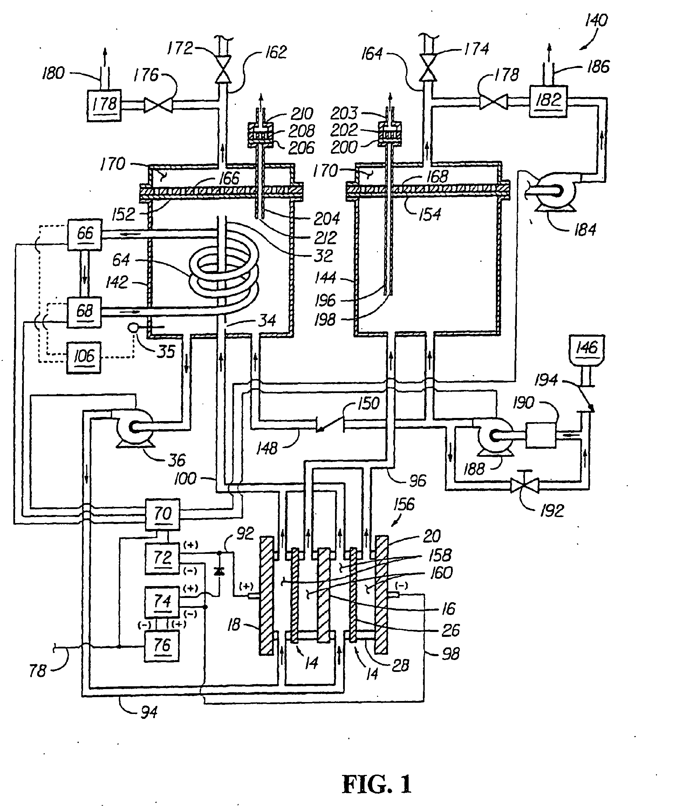

Figure 1 is a schematic diagram of a self-controlled ozone generator 140 which operates solely on electricity and distilled water. The heart of the ozone generator 140 is a stack 156 of electroyltic cells (two shown) 14 separated by bipolar plates (one shown) 16 and sandwiched between a positive end plate 18 and a negative end plate 20. Each of the two cells have an anode compartment 158 and a cathode compartment 160 separated by a proton exchange membrane 26. The cells are constructed in a similar manner as those cells described in U.S. Patent No. 5,460,705 with the primary difference being that the preferred cathode and anode compartments of the present invention include rolled, expanded metal flowfields and the cathode compartment is filled with water instead of gas. The flow of fluid in and out of the anode and cathode compartments is schematically shown in Figure 1 as passing through framing members 28 for purposes of simplicity. However, it should be recognised that the fluids actually pass through manifolds formed by adjacent framing members 28, bipolar plates 16, proton exchange membranes 26 and the like which communicate the fluid to openings in the end plates 18, 20.

The anode compartment 158 is provided with water from an anode reservoir 142. The anode reservoir 142 also serves as a liquid/gas separator wherein oxygen and ozone generated in the anode compartment 158 diffuses from the de-ionised water and collects at the top of the reservoir 170. The reservoir 142 preferably includes a stand pipe 32 which enhances the liquid/gas separation. A preferred stand pipe 32 includes a small hole 34 in it side-wall below the water line, most preferably near the bottom of the anode reservoir 30, which allows the water level in the stand pipe 32 to drop when the ozone generator 10 is in a low flow idle mode, such as when the re-circulation pump 36 is turned of, so that gases will continue to rise from the anode compartment 158 through natural means. The small hole 34 does not interfere with flow of the gases up the stand pipe 32 during normal operation.

The water in the anode reservoir 142 is re-circulated by a pump 36 back to the anode compartments 158. As water is consumed by the electrochemical reaction which produces oxygen and ozone, water may be added to the anode reservoir from a de-ionised water source 146 or from the cathode reservoir 1244, as will be described in greater detail below. The gases accumulating in the upper portion of the anode reservoir 142 comprise essentially oxygen and ozone.

The cathode reservoir 144 holds de-ionised water which rises from the cathode compartments 160. Hydrogen generated in the cathode compartments 160 diffuses from the de-ionised water and collects at the top of the reservoir 144.

The anode reservoir 142 and the cathode reservoir 144 are preferably in communication with each other and a source of de-ionised (DI) water 146. While these components may be communicated in a variety of ways, it is preferred that the system remain simple and include a minimal number of valves and couplings. One preferred configuration is shown in Figure 1.

A fluid line 148 is provided between the cathode reservoir 144 and the anode reservoir 142 and the line 148 is small in diameter to provide a sufficiently rapid fluid flow from the cathode reservoir 144 to the anode reservoir 142 so that ozone dissolved in the anode water is not allowed to diffuse into the cathode reservoir 144. A back flow prevention device 150 prevents water or gas flow from the anode reservoir 142 to the cathode reservoir 144.

A boost pump 188 is provided to force water into the fluid line 148 between the de-ionised water source 146 and the water reservoirs 142, 144. To further condition the water, a resin bed 190 may be added to the water source line. It is preferred to further include a return loop containing flow rate adjusting means 192 in order to continuously polish the incoming water. A back flow prevention device 194 is useful to prevent water from returning to the source 146.

A cooling member 64 is disposed in a thermal relationship with the water in the anode reservoir 142. Preferably, the cooling member 64 is a cooling coil disposed within the anode reservoir 142 that circulates a cooling fluid through a cooling cycle that includes a condenser 66 and a compressor 68. While only about three windings of the cooling coil 64 are shown, any number of windings may be used.

The ozone generator 10 also includes a main power supply unit 70 and a power converter 72 for converting AC current to DC current for operation of the array of electrolytic cells 12. The main power supply unit 70 preferably provides electrical power to all electrically powered devices in the generator 10 through appropriate electrically conducting wires. The generator 10 preferably includes a battery 74 which is used to backup the main power supply unit 70 during electrical interruption and to provide smooth DC power to the system controller 44. The battery 74 is preferably continuously charged by a battery charger 76 in order to maintain the battery 74 at a full charge. The main power supply unit 70 and the battery charger 76 are directly connected through electrical line 78 to some external source of AC electrical power, such as a standard household electrical line or a gasoline powered generator for remote use.

The anode reservoir 142 and the cathode reservoir 144 are provided with hydrophobic membranes or phase separators 152, 154 that prevent the liquid water from escaping out of the tops of the reservoirs 142, 144. These hydrophobic phase separators 152, 154 provide a barrier to water in its liquid state, but allow the free transmission of gases such as water vapour, hydrogen gas, oxygen gas, and ozone gas. The separators 152, 154 allow water from the de-ionised water source 146 to displace any gases in the reservoirs 142, 144 during initial filling. After all the gases are eliminated from the reservoirs 142, 144 and the water is in direct contact with the hydrophobic membranes 152, 154, then the transfer of water ceases as the pressures in the reservoirs 142, 144 equalise with that of the water source 146. The water in each reservoir 142, 144 continuously remains at this level during all phases of operation.

During normal operation of the ozone generation system 140, gas bubbles are generated in the electrolyser 156 and then transfer to the water reservoirs. Oxygen and ozone gas bubbles generated in the anode compartments 158 of the electrolyser 156 are transferred to the anode reservoir 142 and the hydrogen gas bubbles generated in the cathode compartments 160 are transferred to the cathode reservoir 144 where the gas bubbles rise to the top surface of their respective reservoirs into contact with the hydrophobic membranes 152, 154. The hydrophobic membranes provide little or no restriction to the transmission of gas and water vapour from inside the reservoirs, at elevated pressure, to the vent lines 162, 164. The separators 152, 154 are suitably supported by support structures 166, 168 which provide free flow of gas and any condensed liquid, but provide sufficient support of the membranes so that pressure differentials between the water in the reservoirs and the gas in the vent lines may possibly exceed about 6.89 bar (100 psi). The membrane 152 and the support 166 are in turn provided with mechanical support and liquid and gas sealing by the vessel top 170. The ozone/oxygen vent 162 is in direct communication with the dry side of the membrane 152 allowing the gas previously contained in the bubbles to leave the anode reservoir. Likewise, the hydrogen vent 164 is in direct communication with the dry side of its membrane 154 allowing the hydrogen gas previously entrained in bubbles to leave the cathode reservoir 144.

A pressure regulator 172 may be added to allow the pressure of the oxygen and ozone gas on the dry side of the membrane 152 to reach any value up to the pressure of the liquid within the vessel 142. In a similar manner, a pressure regulator 174 may be added to the hydrogen vent 164 to control the hydrogen delivery pressure. The pressure regulators 172, 174 may be operated independently of each other allowing the gases from the anode reservoir 142 and the cathode reservoir 144 to be regulated individually at gas pressures from sub-ambient up to the pressure of the water which is common to both the anode reservoir 142 and the cathode reservoir 144. Over-pressure regulators 176, 178 may be added to prevent over-pressurising the system in the event that the main discharge vents 162, 164 become blocked or surplus gas is produced. Ozone exiting the pressure release valve 176 may be destroyed using a catalytic destruct unit 178 before the gas is released through vent 180 to the atmosphere. Surplus hydrogen, or that resulting from over-pressure gas, may be destroyed in a catalytic destruct unit 182 that reacts the hydrogen gas with oxygen from the air provided by an air pump 184. The resulting water vapour and surplus air is released through a vent 186 to the atmosphere. The two destruct units 178, 182 may be placed in thermal communication with each other so the waste heat from the hydrogen/oxygen combination reaction will assist in the destruction of the ozone gas.

An auxiliary vent system in the cathode reservoir 144 prevents the transfer of hydrogen gas from the cathode reservoir 144 to the anode reservoir 142 in the event of an interruption of the water supply. This is accomplished using a dip tube 196 that extends downward in the cathode reservoir 144 to a point 198 above the bottom of the reservoir which defines the minimum acceptable water level. The dip tube 196 extends upward out of the reservoir and communicates with a hydrophobic membrane 200 with suitable support and housing 202. When the water level is above point 198 and the reservoir is under pressure, water forces any gas in the tube 196 through the hydrophobic membrane 200 and out the vent 203 which is at atmospheric pressure or below. Should the water in the cathode reservoir drop below point 198, the water presently in the tube will drain back out of the tube 196 into the reservoir 144 allowing the gas within the cathode reservoir 144 to escape up me dip tube and out the vent 203. In this manner, the pressure in the reservoir 144 is reduced down to ambient pressure to prevent any further transfer of liquid from the cathode reservoir to the anode reservoir.

The anode reservoir 142 preferably includes a similar auxiliary vent system having a dip tube 204, hydrophobic phase separator 206, housing 208, and vent 210. Through some event, such as pressure fluctuations in the incoming water, if the pressure in the anode reservoir 142 is higher than the pressure in the cathode reservoir 144, then the pressure driven transfer of water from the cathode reservoir to the anode reservoir will stop. When the water level in the anode reservoir falls below the lower opening 212 of the dip tube 204, the pressure within the anode system is reduced and the pressure driven water transfer from the cathode reservoir to the anode reservoir is re-established.

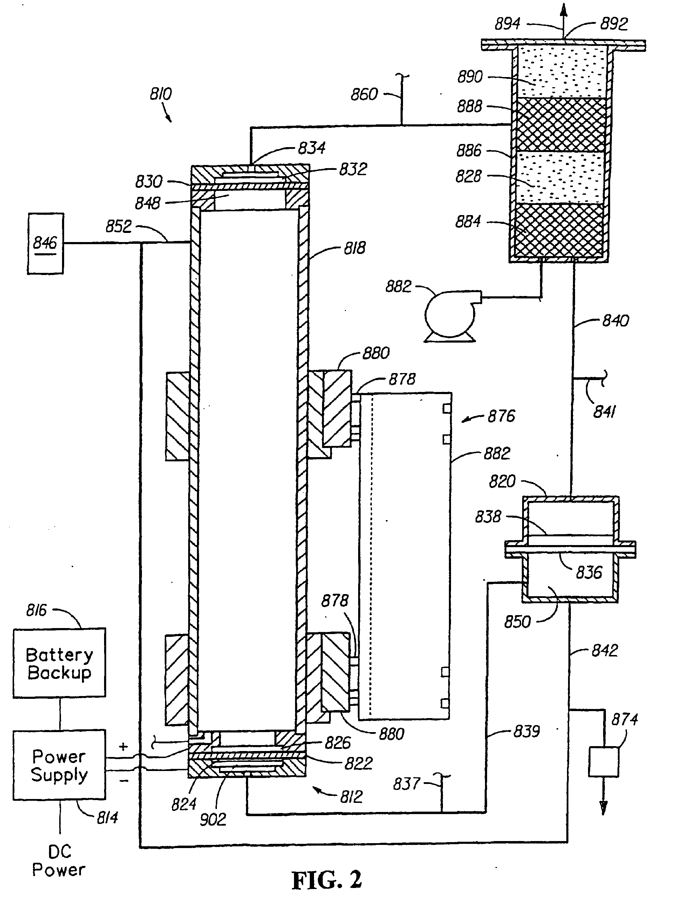

Figure 2 is a schematic diagram of an entirely passive ozone generation system 810 which operates solely on electricity and water, preferably either deionised, distilled or reverse osmosis (RO) water. The system 810 includes an ozone generator 812, a power supply 814 and battery backup 816, an anode reservoir 818, cathode phase separator 820 and a gas destruction unit 828. The ozone generator 812 is preferably an electrolytic cell comprising a proton exchange membrane 822, a cathode 824 with substrate and flowfield and an anode 826 with substrate and flowfield. The anode reservoir 818 comprises an anode gas phase separator membrane 830 and porous support member 832. The anode 826 is provided with water from the anode reservoir 818. The anode catalyst enables the anode 826 to use the water to produce oxygen and ozone a portion of which dissolves into water in the anode reservoir 818. The anode reservoir 818 also serves as a liquid/gas separator wherein oxygen and ozone generated at the anode 826 forms bubbles or diffuses from the deionised water and rises to the top of the reservoir 818. These gasses pass through the anode phase separator membrane 830, preferably a porous hydrophobic membrane, which is provided with suitable support 832 and flow channel 834 to maintain the integrity of the membrane 830 while the anode reservoir 818 is operated at a desired system pressure.

The cathode 824 is in fluid communication with a cathode phase separator 820 having a porous hydrophobic membrane 836 which is provided with a suitable porous support member 838. Hydrogen gas from the dry side of the membrane 836 is discharged through the support member 838 and through line 840 either to the gas destruct unit 828 or to an unrelated process through line 841. It is preferred that the water that is transferred from the anode 826 to the cathode 824 through electroosmosis be continuously returned from the cathode phase separator 820 to the anode reservoir 818 through a fluid line 842, preferably made of small bore tubing. The fluid line 842 is small in diameter to provide a sufficiently rapid fluid flow from the cathode phase separator 820 to the anode reservoir 818 so that ozone dissolved in the anode water does not diffuse into the cathode phase separator 820.

The hydrophobic phase separators 830, 836 provide a barrier to water in its liquid state, but allow the free transmission of gases such as water vapour, hydrogen gas, oxygen gas, and ozone gas. The separators 830, 836 allow the water source 846 to be placed in direct fluid communication with the anode reservoir 818 so that water will displace any gases in the anode reservoir 818 so that water will displace any gases in the anode reservoir 818 or cathode phase separator 820 during initial filling and refilling of the anode reservoir. After all the gases are eliminated from the head space 848 of the anode reservoir 818 and the head space 850 of the cathode reservoir 820,then the water will make direct contact with the hydrophobic membranes 830, 836 and the transfer of water will cease as the pressures in the anode reservoir 818 and cathode reservoir 820 equalise with that of the water source 846. Provided that the water pressure in the water source 846 is higher than that in the anode reservoir, the anode reservoir 818 and cathode phase separator 820 will remain full of water during all phases of operation. The water supply line 852 is preferably small in diameter so that ozone dissolved in the anode reservoir water is not allowed to diffuse into the water source 846.

A cooling member 876 is preferably provided for removing waste heat from the system and further chilling the anode reservoir water to decrease degradation of dissolved ozone and increase the ozone saturation limit. A preferred cooling member 876 is shown in Figure 2 comprising one or more thermoelectric devices 878 in thermal contact with the anode reservoir 818, such as through the thermal heat spreaders 880. The hot reservoirs of the thermoelectric devices 878 are preferably coupled to a heat dissipating member, such as the heat sinks 882 cooled by ambient air. The thermal heat spreaders 880 are provided to increase the surface area for heat transfer through the walls of the anode reservoir 818, especially if the reservoir is made from a plastic or metal having poor heat transfer properties.

The hydrogen generated at the cathode 824 and phase separated by the hydrophobic membrane 836 may be consumed by an unrelated process, stored in a pressure vessel, or, as shown in Figure 2, directed to a gas destruct system 828. The gas destruct system 828 consists of a source of combustion air 882, a hydrogen-air mixing region 884, a hydrogen destruct region 886 having a hydrogen-air combination catalyst, an air-ozone mixing region 888, and an ozone destruct region containing an ozone destruction catalyst 890. The gas 203, platinum, etc., or combinations thereof destruct system 828 also includes a port 892 that may be open to the room or atmosphere, or directed to a drain or vent 894. The preferred gas mixing regions 884, 888 will contain a tortuous path, such as that provided by stainless steel wool or other similar material placed upstream of the catalyst, to distribute the gases evenly across the entire face of the catalyst and to provide sufficient mixing of the gas and air. The hydrogen destruct catalyst may be any suitable hydrogen-oxygen combination catalyst, such as the noble metals (platinum or palladium), which may be supported on a ceramic structure, alumina beads or pellets, plated on to a metallic substrate, etc. Likewise, the ozone destruct catalyst may be any catalyst suitable for the decomposition of ozone into oxygen. Suitable catalysts include, but are not limited to, MnO₂, Fe₂O₃, platinum, etc. or combinations thereof. It is preferred that the hydrogen destruct region 886 be placed upstream and/or in thermal contact with the ozone destruct region 890 allowing the heat generated from the oxidation of hydrogen to assist in the destruction of surplus ozone. Certainly, if gaseous ozone and/hydrogen can be used for other purposes, such as being supplied to another process, then it is not necessary to destruct either or both gases and the heat provided by the hydrogen destruction may be provided by other sources such as electrical resistance heaters, or the ozone destruct maybe operated at room temperature, etc.

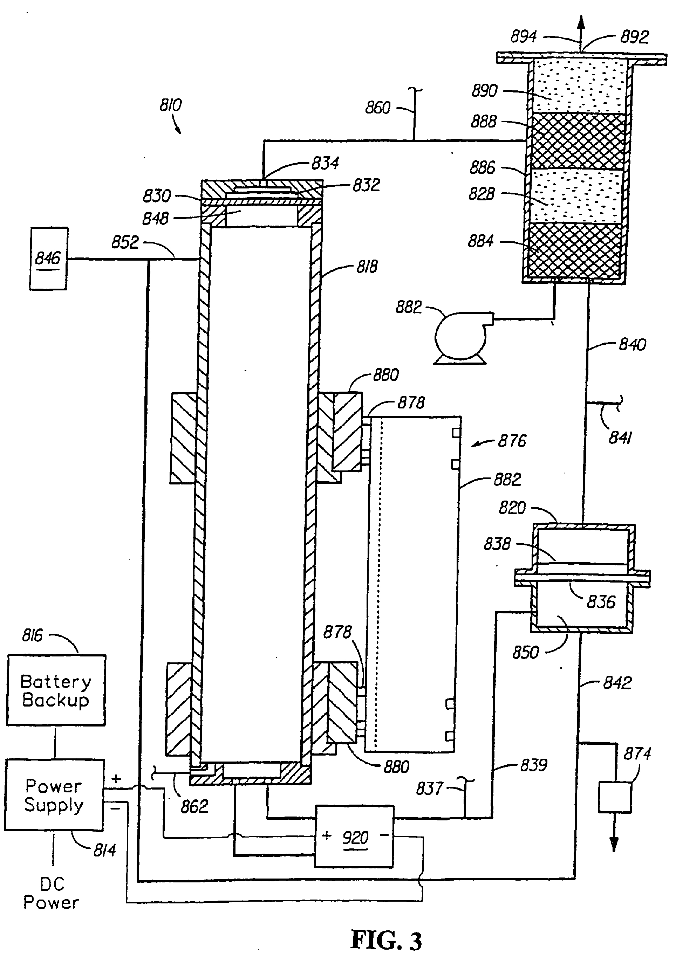

Figure 3 is a schematic diagram of an ozone generator system of the present invention that is similar to the system of Figure 2 except that the single cell 812 having anode 826 in direct fluid communication with the anode reservoir 818 has been replaced with an electrolytic cell 920 that is in fluid communication with the anode reservoir 818 and cathode phase separator 820 through tubes. Note that the remainder of the system may be unchanged and may still operate in an entirely passive mode.

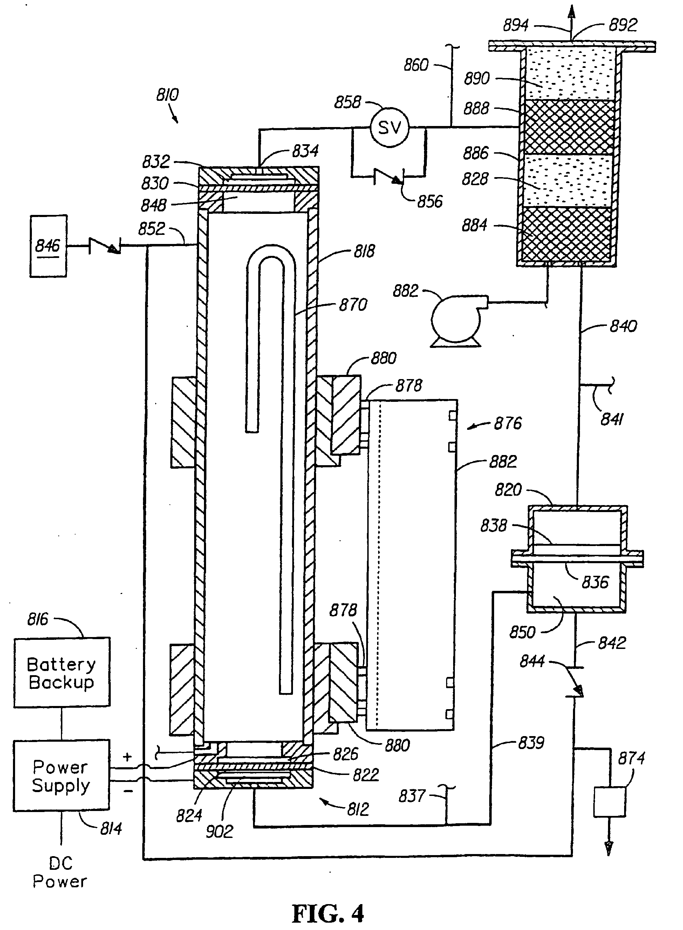

Figure 4 is a schematic diagram of a self-pressurising ozone generator system. If the desired delivery pressure from the ozone generating system 810 is higher than that of the water source 846, then the system 810 may be operated in a self-pressurising mode with the addition of a backflow prevention device 854, a back pressure regulating device 856 and pressure relief solenoid valve 858. Alternatively, these two components 856, 858 may be combined into a single solenoid valve that is designed with a suitable orifice and closing force so that the single solenoid valve is forced open by the gas pressure when the desired system pressure is reached. This alternate valve will then maintain the system pressure at or near the cracking pressure of the valve.

To fill the anode reservoir 818 with water in the self-pressurising system, the pressure in the anode reservoir 818 is relieved by opening the pressure relief solenoid valve 858. When the anode reservoir pressure drops below the water source pressure, water is allowed to flow freely from the water source 846 into the anode reservoir 818. Water is allowed to enter the anode reservoir 818 over a suitable period of time or until a sufficient amount of water is indicated. The pressure relief valve 858 is then closed and the pressure within the anode reservoir rises as gas is formed at the anode and confined within the anode reservoir 818. The back pressure regulator 856 or high cracking pressure solenoid valve 858 described earlier, operate to maintain the desired working pressure. This system is sufficient for regulating the pressure of either ozone gas being delivered to an ozone gas consuming process through line 860, ozonated water being delivered to an ozonated water consuming process through line 862, or hydrogen gas being delivered through line 841. Alternatively, this pressure control system 856, 858 maybe eliminated if suitable control is provided by an ozone consuming process (not shown). It should be recognised that any number of suitable methods of maintaining and relieving the system pressure could be devised by someone skilled in the art.

The anode reservoir 818 or cathode phase separator 820 may also be provided with a means of preventing hydrostatic pressures from increasing to catastrophic values during periods when all gases are eliminated from the anode reservoir 818 and the cathode phase separator 820. The additional system volume required by these bubbles may be provided by a captive gas system 866, such as an inverted U-tube 870 whose ends 868, 872 are situated so as to provide a gas chamber 866 during initial filling of the anode reservoir 818. Any number of equivalent methods of pressure relief from the liquid side of the membrane, including conventional pressure relief valves, maybe envisioned. However, the simple gas chamber 866 is preferred, because it is unlikely to fail, involves no machining or welding and may be placed in either the anode reservoir or cathode phase separator during fabrication. The U-tube 870 may be supported by allowing the bottom of the long leg 868 to rest near the bottom of the anode reservoir 818. The short leg 870 allows the gas chamber 866 to be re-established each time the water level I the anode reservoir 818 drops below the level of the opening 872. More preferably, the captive gas system may comprise a gas trap 837 in fluid line 839 or any fluid line in communication with the anode reservoir 818. Additionally, a safe-failing over pressure device such as a rupture disk 874 may be included to prevent equipment damage should the normal methods of pressure relief fail. Alternatively, the nature breakthrough pressure of the hydrophobic membranes may be used to prevent catastrophic failures due to over-pressure within the system.

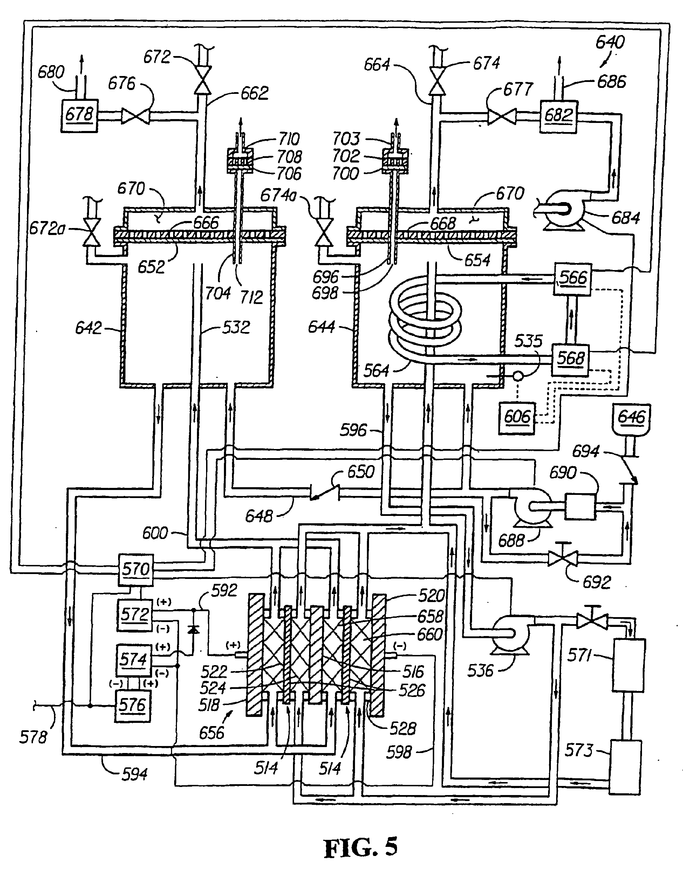

The system of Figure 5 shows a main cathode water loop including a cathode reservoir 644, a re-circulation pump 536, a heat exchanger 564 and the electrolyser 656. The system further includes a side loop in communication with the main cathode water loop, wherein the side loop directs a portion of the re-circulated water through a purifying system, preferably comprising the carbon filter bed 571 (primarily to destroy and ozone that may be in the water) and the ion exchange bed 573.

The heat exchanger or cooling member 564 is shown as a coil of tubing that circulates a cool fluid from a refrigeration system comprising a compressor 568 and a condenser 566. It should be recognised that the cooling member may be any of a number of various designs known in the an and may include various support components or utilities (not shown). The cooling member or system may control the temperature of the water in cathode water loop in various manners, such as cycling a condenser unit on and off according to a thermocouple in thermal communication with the cathode water or any other portion of the system, including the anode where much of the heat is generated.

The passive generator system 640 provides all water handling requirements and maintains a full water level in the anode reservoir 642 and cathode reservoir 644. These reservoirs 642, 644 are both placed in direct communication with the de-ionised water source 646. The fluid line 648 between the cathode reservoir 644 and the anode reservoir 642 is small in diameter to provide a sufficiently rapid fluid flow from the cathode reservoir 644 to the anode reservoir 642 so that ozone dissolved in the anode water is not allowed to diffuse into the cathode reservoir 644. A back flow prevention device 650 prevents water or gas flow from the anode reservoir 642 to the cathode reservoir 644.

Water is held in the reservoirs using hydrophobic membranes or phase separators 652, 654 that prevent the liquid water from escaping out o the tops of the reservoirs 642, 644. These hydrophobic phase separators 652, 654 provide a barrier to water in its liquid state, but allow the free transmission of gases such as water vapour, hydrogen gas, oxygen gas and ozone gas. The separators 652, 654 allow water from the de-ionised water source 646 to displace any gases in the reservoirs 642, 644 during initial filling. After all the gases are eliminated from the reservoirs 642, 644 and the water is in direct contact with the hydrophobic membranes 652, 654, then the transfer of water ceases as the pressures in the reservoirs 642, 644 equalise with that of the water source 646. The water in each reservoir 642, 644 continuously remains at this level during all phases of operation so long as the supply of water is maintained. Pressure relief valves 672a and 674a are preferably provided to relieve high water pressure before damaging the hydrophobic membrane.

During normal operation of the ozone generation system 640, gas bubbles are generated in the electrolyser 656 and then transferred to the water reservoirs. Oxygen and ozone gas bubbles generated in the anode compartments 658 of the electrolyser 656 are transferred to the anode reservoir 642 and hydrogen gas bubbles generated in the cathode compartments 660 are transferred to the cathode reservoir 644 where the gas bubbles rise to the top surface of their respective reservoirs into contact with the hydrophobic membranes 652, 654. The hydrophobic membranes provide little or no restriction to the transmission of gas and water vapour from inside the reservoirs, at elevated pressure, to the vent lines 662, 664. The separators 652, 654 are suitably supported by support structures 666, 668 which provide free flow of gas and any condensed liquid, but provide sufficient support of the membranes so that pressure differentials between the water in the reservoirs and the gas in the vent lines may possibly exceed about 6.89 bar (100 psi). The membrane 652 and the support 666 are in turn provided with mechanical support and liquid and gas sealing by the vessel top 670. The ozone/oxygen vent 662 is in direct communication with the dry side of the membrane 652 allowing the gas previously contained in the bubbles to leave the anode reservoir. Likewise, the hydrogen vent 664 is in direct communication with the dry side of its membrane 654 allowing the hydrogen gas previously entrained in bubbles to leave the cathode reservoir 644.

A pressure regulator 672 may be added to allow the pressure of the oxygen and ozone gas on the dry side of the membrane 652 to reach any value up to the pressure of the liquid within the vessel 642. In a similar manner, a pressure regulator 674 may be added to the hydrogen vent 664 to control the hydrogen delivery pressure. The pressure regulators 672, 674 may be operated independently of each other allowing the gases from the anode reservoir 642 and the cathode reservoir 644 to be regulated individually at gas pressures from sub-ambient up to the pressure of the water which is common to both the anode reservoir 642 and the cathode reservoir 644. Over-pressure regulators 676, 678 may be added to prevent over-pressurising the system in the event that the main discharge vents 662, 664 become blocked or surplus gas is produced. Additional pressure relief valves 672a, 674a prevent the water pressure in the reservoirs from exceeding design limits. Ozone exiting the pressure release valve 676 may be destroyed using a catalytic destruct unit 678 before the gas is released through Vent 680 to the atmosphere. Surplus hydrogen, or that resulting from over pressure gas, may be destroyed in a catalytic destruct unit 682 that reacts the hydrogen gas with oxygen from the air provided by an air pump 684. The resulting water vapour and surplus air is released through a vent 686 to the atmosphere. The two destruct units 678, 682 may be placed in thermal communication with each other so the waste heat from the hydrogen/oxygen combination reaction will assist in the destruction of the ozone gas.

An optional boost pump 688 is added between the de-ionised water source 646 and the water reservoirs 642, 644. To further condition the water, a resin bed 690 may be added to the water source line. It is preferred to further include a return loop containing flow rate adjusting means 692 in order to continuously polish the incoming water. A back flow prevention device 694 is useful to prevent water from returning to the source 646.

An auxiliary vent system in the cathode reservoir 644 prevents the transfer of hydrogen gas from the cathode reservoir 644 to the anode reservoir 642 in the event of an interruption of the water supply. This is accomplished using a dip tube 696 that extends downward in the cathode reservoir 644 to a point 698 above the bottom of the reservoir which defines the minimum acceptable water level. The dip tube 696 extends upward out of the reservoir and communicates with a hydrophobic membrane 700 with suitable support and housing 702. When the water level is above point 698 and the reservoir is under pressure, water forces any gas in the tube 696 through the hydrophobic membrane 700 and out the vent 703 which is at atmospheric pressure or below. Should the water in the cathode reservoir drop below point 698, the water presently in the tube will drain back out of the tube 696 into the reservoir 644 allowing the gas within the cathode reservoir 644 to escape up the dip tube and out the vent 703. In this manner, the pressure in the reservoir 644 is reduced down to ambient pressure to prevent any further transfer of liquid from the cathode reservoir to the anode reservoir.

The anode reservoir 642 preferably includes a similar auxiliary vent system having a dip tube 704, hydrophobic phase separator 706, housing 708 and vent 710. Through some event, such as pressure fluctuations in the incoming water, if the pressure in the anode reservoir 642 is higher than the pressure in the cathode reservoir 644, then the pressure driven transfer of water from the cathode reservoir to the anode reservoir will stop. When the water level in the anode reservoir falls below the lower opening 712 of the dip tube 704, the pressure within the anode system is reduced and the pressure driven water transfer from the cathode reservoir to the anode reservoir is re-established.

Therefore, system 640 includes a cathode re-circulation pump 536, a power supply 570, a cooling system 566 and a stand pipe 532. The cooling system 564, 566, 568 may be operated by an electrical or mechanical temperature controller 606 and a temperature sensor 535 in direct communication with the condenser system and the body to be temperature regulated, shown as the anode reservoir water in Figure 5 but which body may be the anode end plate or any other location representative of the electrolyser temperature. The power supply unit 570 may also operate in an autonomous mode with self-control of the power output to match ozone demand. A thermal cut-out switch may be utilised to remove power from the electrolyser should a threshold temperature be exceeded.

In the described embodiments the gas releasing members in each of the anode and cathode reservoirs is in the form of a hydrophobic gas permeable member. However, it is possible that in an embodiment of the invention one reservoir is provided with a hydrophobic gas permeable member and the other reservoir is provided with a gas releasing valve. The gas releasing valve would be controlled by a system controller programmed to operate the valve based on the water level in the respective reservoir. Of course many alternate embodiments incorporating gas releasing valves may be utilised.

## Claims

1. An ozone generating system, comprising: one or more electrolytic cells comprising an anode chamber and a cathode chamber; an anode reservoir in fluid communication with the anode chamber; a cathode reservoir in fluid communication with the cathode chamber, wherein an ion exchange membrane is disposed between the anode and the cathode **characterised in that** the anode and cathode reservoirs each comprise a water inlet with a water source in fluid communication with the water inlet port of the anode reservoir, and a water source in fluid communication with the water inlet port of the cathode reservoir; the anode reservoir comprising a first gas releasing member, and the cathode reservoir comprising a second gas releasing member, one or more of the gas releasing members comprising a hydrophobic gas permeable member.

2. The system of Claim 1 wherein a single water source is in communication with the water inlet ports, the system further comprising a water pressure boosting pump in communication with the water source.

3. The system of Claim 1 or 2 wherein there is no obstruction to flow from the water source to the cathode reservoir.

4. The system of any one of the preceding Claims wherein water re-circulating means are provided for re-circulating water between the anode reservoir and the anode chamber.

5. A system according to any one of the preceding Claims wherein the anode reservoir has a stand pipe for returning water from the anode chamber.

6. The system of Claim 5 wherein the stand pipe has a small hole for equalising water levels in the stand pipe and the anode reservoir at low re-circulating rates.

7. The system of any one of the preceding Claims wherein the restricted fluid communication is provided by a flow line communicating the anode reservoir and the cathode reservoir, the flow line having a sufficiently small diameter to substantially eliminate diffusion of dissolved ozone and oxygen in the anode water into the cathode.

8. The system of Claim 7 wherein the flow line has a back flow prevention device to prevent communication of water or gas from the anode reservoir to the cathode reservoir.

9. The system of any one of the preceding Claims further comprising a flow line between the anode reservoir and the anode chamber, and a pump disposed in the flow line.

10. The system of any one of the preceding Claims wherein the anode reservoir is elevated above the anode chamber and the anode reservoir inlet communicates with the top of the anode chamber.

11. The system of Claim 10 wherein gases generated at the anode rise into the anode reservoir.

12. The system of any one of the preceding Claims wherein at least one gas releasing member is a valve.

13. The system of Claim 12 further comprising a system controller programmed to operate the or each valve based on the water level in the respective reservoir.

14. The system of any one of Claims 1 to 13 wherein one or more of the hydrophobic, gas permeable members comprises porous polytetrafluoroethylene.

15. The system of any one of the preceding Claims further comprising a pressure regulator disposed in fluid communication with one or more of the gas releasing members.

16. The system of any one of the preceding Claims further comprising a dip tube having a first end disposed in the cathode reservoir, a second end at nearly ambient pressure, and a hydrophobic, gas permeable membrane disposed between the first and second ends.

17. The system of any one of the preceding Claims further comprising a dip tube having a first end disposed in the anode reservoir, a second end at nearly ambient pressure, and a hydrophobic, gas permeable membrane disposed between the first and second ends.

18. The system of any one of the preceding Claims further comprising a battery backup in electronic communication with the electrolytic cells.

19. The system of Claim 18 wherein the battery backup is electronically connected in a parallel circuit with a power supply.

20. The system according to Claim 4 or any Claim dependent thereon wherein the re-circulating means comprises a pump adapted to extract water from the anode reservoir and to pump water past the anode, water from the anode being re-introduced to the anode reservoir.

21. The system according to any one of the preceding Claims wherein at least one said reservoir is provided with a water cooling member in thermal communication with the reservoir.

22. The system according to Claim 21 wherein the water cooling member comprises a cooling coil that circulates a cooling fluid through a cooling cycle that includes a condenser and a compressor.

23. The system according to any one of the preceding Claims provided with a system controller adapted to receive signals from sensors adapted to sense the levels of liquid in the reservoirs and to send control signals to active components of the system.

## Revendications

1. Un système de génération d'ozone, comprenant : une ou plusieurs cellules à électrolyte, comprenant une chambre d'anode et une chambre de cathode ; un réservoir d'anode, mis en communication fluidique avec la chambre d'anode ; un réservoir de cathode, mis en communication fluidique avec la chambre de cathode, dans lequel une membrane échangeuse d'ions est disposée entre l'anode et la cathode, **caractérisé en ce que** les réservoirs d'anode et de cathode comprennent chacun une entrée d'eau, avec une source d'eau mise en communication fluidique avec l'orifice d'entrée d'eau du réservoir d'anode, et une source d'eau mise en communication fluidique avec l'orifice d'entrée d'eau du réservoir de cathode ; le réservoir d'anode comprenant un premier organe de dégagement de gaz, et le réservoir de cathode comprenant un deuxième organe de dégagement de gaz, un ou plusieurs des organes de dégagement de gaz comprenant un organe perméable aux gaz, hydrophobe.

2. Le système selon la revendication 1, dans lequel une source d'eau unique est mise en communication avec les orifices d'entrée d'eau, le système comprenant en outre une pompe de surpression d'eau, mise en communication avec la source d'eau.

3. Le système selon la revendication 1 ou 2, dans lequel aucune obstruction à l'écoulement n'agit entre la source d'eau et le réservoir de cathode.

4. Le système selon l'une quelconque des revendications précédentes, dans lequel des moyens de recirculation de l'eau sont prévus pour la recirculation de l'eau entre le réservoir d'anode et la chambre d'anode.

5. Un système selon l'une quelconque des revendications précédentes, dans lequel le réservoir d'anode comprend un tube montant pour retourner l'eau venant de la chambre d'anode.

6. Le système selon la revendication 5, dans lequel le tube montant présente un petit trou pour égaliser les niveaux d'eau dans le tube montant et le réservoir d'anode, lorsqu'on est à de faibles débits de recirculation.

7. Le système selon l'une quelconque des revendications précédentes, dans lequel la communication de fluide restreinte est fournie par une tuyauterie d'écoulement, faisant communiquer le réservoir d'anode et le réservoir de cathode, la tuyauterie d'écoulement ayant un diamètre suffisamment petit pour pratiquement éliminer la diffusion de l'ozone et l'oxygène, dissous dans l'eau d'anode, dans la cathode.

8. Le système selon la revendication 7, dans lequel la tuyauterie d'écoulement présente un dispositif d'empêchement de débit inverse devant empêcher la communication de l'eau ou du gaz du réservoir d'anode au réservoir de cathode.

9. Le système selon l'une quelconque des revendications précédentes, comprenant en outre une tuyauterie d'écoulement entre le réservoir d'anode et la chambre d'anode, et une pompe, disposée dans la tuyauterie d'écoulement.

10. Le système selon l'une quelconque des revendications précédentes, dans lequel le réservoir d'anode est a un niveau élevé au-dessus de la chambre d'anode et l'entrée du réservoir d'anode communique avec la partie supérieure de la chambre d'anode.

11. Le système selon la revendication 10, dans lequel des gaz, générés à l'anode, montent dans le réservoir d'anode.

12. Le système selon l'une quelconque des revendications précédentes, dans lequel au moins un organe de dégagement de gaz est une soupape.

13. Le système selon la revendication 12, comprenant en outre un contrôleur de système, programmé pour faire fonctionner la ou chaque soupape d'après le niveau d'eau dans le réservoir respectif.

14. Le système selon l'une quelconque des revendications 1 à 13, dans lequel un ou plusieurs des organes perméables aux gaz, hydrophobes, est composé de polytétrafluoroéthylène poreux.

15. Le système selon l'une quelconque des revendications précédentes, comprenant en outre un régulateur de pression, disposé en communication fluidique avec un ou plusieurs des organes de dégagement de gaz.

16. Le système selon l'une quelconque des revendications précédentes, comprenant en outre un tube immergé, ayant une première extrémité disposée dans le réservoir de cathode, une deuxième extrémité, placée à peu près à la pression ambiante, et une membrane perméable aux gaz, hydrophobe, disposée entre les première et deuxième extrémités.

17. Le système selon l'une quelconque des revendications précédentes, comprenant en outre un tube immergé, ayant une première extrémité disposée dans le réservoir d'anode, une deuxième extrémité placée à peu près à la pression ambiante et une membrane perméable aux gaz, hydrophobe, disposée entre les première et deuxième extrémités.

18. Le système selon l'une quelconque des revendications précédentes, comprenant en outre une sauvegarde par batterie, en communication électronique avec les cellules à électrolyte.

19. Le système selon la revendication 18, dans lequel la sauvegarde par batterie est reliée électroniquement en un circuit parallèle avec une alimentation de puissance.

20. Le système selon la revendication 4 ou l'une quelconque des revendications dépendantes de celle-ci, dans lequel les moyens de recirculation comprennent une pompe, adaptée pour extraire de l'eau depuis le réservoir d'anode et pour pomper l'eau par l'anode, l'eau venant de l'anode étant réintroduite au réservoir d'anode.

21. Le système selon l'une quelconque des revendications précédentes, dans lequel au moins un dit réservoir est muni d'une chambre de refroidissement d'eau, mise en communication thermique avec le réservoir.

22. Le système selon la revendication 21, dans lequel l'organe de refroidissement d'eau comprend un serpentin de refroidissement, faisant circuler un fluide de refroidissement à travers un circuit de refroidissement comprenant un condenseur et un compresseur.

23. Le système selon l'une quelconque des revendications précédentes, muni d'un contrôleur de système, adapté pour recevoir des signaux venant de capteurs, adaptés pour détecter les niveaux de liquide dans les réservoirs et pour envoyer des signaux de commande à des composants actifs du système.

## Patentansprüche

1. Ozonerzeugungssystem, umfassend: eine oder mehrere Elektrolysezelle(n) mit einer Anodenkammer und einer Kathodenkammer; einen Anodenbehälter in Flüssigkeitsverbindung mit der Anodenkammer; einen Kathodenbehälter in Flüssigkeitsverbindung mit der Kathodenkammer, worin eine Ionenaustauschmembran zwischen der Anode und der Kathode angeordnet ist, **dadurch gekennzeichnet, daß** die Anoden- und Kathodenbehälter jeweils einen Wassereinlaß mit einer Wasserquelle in Flüssigkeitsverbindung mit der Wassereinlaßöffnung des Anodenbehälters und einer Wasserquelle in Flüssigkeitsverbindung mit der Wassereinlaßöffnung des Kathodenbehälters umfassen, wobei der Anodenbehälter ein erstes Gasfreisetzelement umfaßt und der Kathodenbehälter ein zweites Gasfreisetzelement umfaßt, wobei eines oder mehrere der Gasfreisetzelemente ein hydrophobes gasdurchlässiges Element umfaßt.

2. System nach Anspruch 1, **dadurch gekennzeichnet, daß** eine einzige Wasserquelle mit den Wassereinlaßöffnungen in Verbindung steht, wobei das System ferner eine Wasserdruckverstärkungspumpe in Verbindung mit der Wasserquelle umfaßt.

3. System nach Anspruch 1 oder 2, **dadurch gekennzeichnet, daß** kein Hindernis für Strömung von der Wasserquelle zum Kathodenbehälter vorliegt.

4. System nach einem der vorangehenden Ansprüche, **dadurch gekennzeichnet, daß** Wasserzirkulationsmittel zum Umlaufenlassen von Wasser zwischen dem Anodenbehälter und der Anodenkammer vorgesehen sind.

5. System nach einem der vorangehenden Ansprüche, **dadurch gekennzeichnet, daß** der Anodenbehälter ein Standrohr zum Rückführen von Wasser aus der Anodenkammer aufweist.

6. System nach Anspruch 5, **dadurch gekennzeichnet, daß** das Standrohr ein kleines Loch zum Ausgleichen von Wasserständen im Standrohr und im Anodenbehälter bei niedrigen Zirkulationsgeschwindigkeiten aufweist.

7. System nach einem der vorangehenden Ansprüche, **dadurch gekennzeichnet, daß** eingeschränkte Flüssigkeitsverbindung durch eine Durchflußleitung vorgesehen ist, die den Anodenbehälter und den Kathodenbehälter verbindet, wobei die Durchflußleitung einen ausreichend kleinen Durchmesser aufweist, um Diffusion von ungelöstem Ozon und Sauerstoff im Anodenwasser in die Kathode im wesentlichen zu beseitigen.

8. System nach Anspruch 7, **dadurch gekennzeichnet, daß** die Durchflußleitung eine Einrichtung zur Verhinderung von Rückfluß aufweist, um Übertragung von Wasser oder Gas aus dem Anodenbehälter zum Kathodenbehälter zu verhindern.

9. System nach einem der vorangehenden Ansprüche, **dadurch gekennzeichnet, daß** es ferner eine Durchflußleitung zwischen dem Anodenbehälter und der Anodenkammer umfaßt und eine Pumpe in der Durchflußleitung angeordnet ist.

10. System nach einem der vorangehenden Ansprüche, **dadurch gekennzeichnet, daß** der Anodenbehälter über die Anodenkammer angehoben ist und der Anodenbehältereinlaß mit der Oberseite der Anodenkammer in Verbindung steht.

11. System nach Anspruch 10, **dadurch gekennzeichnet, daß** an der Anode erzeugte Gase in den Anodenbehälter aufsteigen.

12. System nach einem der vorangehenden Ansprüche, **dadurch gekennzeichnet, daß** mindestens ein Gasfreisetzelement ein Ventil ist.

13. System nach Anspruch 12, **dadurch gekennzeichnet, daß** es ferner eine Systemsteuerung umfaßt, die programmiert ist, um das oder jedes Ventil auf der Grundlage des Wasserstandes in dem jeweiligen Behälter zu betreiben.

14. System nach einem der Ansprüche 1 bis 13, **dadurch gekennzeichnet, daß** ein oder mehrere der hydrophoben, gasdurchlässigen Elemente poröses Polytetrafluorethylen umfaßt.

15. System nach einem der vorangehenden Ansprüche, **dadurch gekennzeichnet, daß** es ferner einen Druckregler umfaßt, der in Flüssigkeitsverbindung mit einem oder mehreren der Gasfreisetzelemente angeordnet ist.

16. System nach einem der vorangehenden Ansprüche, **dadurch gekennzeichnet, daß** es ferner ein Tauchrohr umfaßt, das ein in dem Kathodenbehälter angeordnetes erstes Ende, ein zweites Ende bei nahezu Umgebungsdruck und eine hydrophobe, gasdurchlässige Membran aufweist, das zwischen den ersten und zweiten Enden angeordnet ist.

17. System nach einem der vorangehenden Ansprüche, **dadurch gekennzeichnet, daß** es ferner ein Tauchrohr umfaßt, das ein in dem Anodenbehälter angeordnetes erstes Ende, ein zweites Ende bei nahezu Umgebungsdruck und eine hydrophobe, gasdurchlässige Membran aufweist, die zwischen den ersten und zweiten Enden angeordnet ist.

18. System nach einem der vorangehenden Ansprüche, **dadurch gekennzeichnet, daß** es ferner einen Netzausfallschutz in elektronischer Verbindung mit den Elektrolysezellen umfaßt.

19. System nach Anspruch 18, **dadurch gekennzeichnet, daß** der Netzausfallschutz in einer parallelen Schaltung mit einer Stromversorgung elektronisch angeschlossen ist.

20. System nach Anspruch 4 oder einem davon abhängigen Anspruch, **dadurch gekennzeichnet, daß** das Zirkulationsmittel eine Pumpe umfaßt, die gestaltet ist, um Wasser aus dem Anodenbehälter zu extrahieren und Wasser an der Anode vorbeizupumpen, wobei Wasser von der Anode in den Anodenbehälter wieder eingeleitet wird.

21. System nach einem der vorangehenden Ansprüche, **dadurch gekennzeichnet, daß** mindestens ein genannter Behälter mit einem Wasserkühlelement in Wärmeverbindung mit dem Behälter versehen ist.

22. System nach Anspruch 21, **dadurch gekennzeichnet, daß** das Wasserkühlelement eine Kühlschlange umfaßt, die ein Kühlfluid durch einen Kühlzyklus im Kreis führt, der einen Kondensator und einen Kompressor enthält.

23. System nach einem der vorangehenden Ansprüche, das mit einer Systemsteuerung versehen ist, die gestaltet ist, um Signale von Sensoren, die gestaltet sind, um die Flüssigkeitsstände in den Behältern zu messen, zu empfangen und Steuersignale an aktive Komponenten des Systems zu senden.
